# EUROPEAN PATENT APPLICATION

(11) **EP 3 572 857 A1**
(43) Date of publication of application: **27.11.2019**
(21) Application number: 18173928.5
(22) Date of filing: 23.05.2018
(51) Int. Cl.: G02B 6/42, H04J 14/04, G02B 6/28, G02B 6/04

(54) **DEVICE FOR ANALYZING MODES OF MULTIMODE OPTICAL FIBERS**

(71) Applicant: Leibniz-Institut für Astrophysik Potsdam (AIP), 14482 Potsdam, Brandenburg (DE)
(72) Inventor: Minardi, Dr., Stefano, 07745 jena (DE); Diab, Momen, 14469 Potsdam (DE)
(74) Representative: Heinemeyer, Karsten

(57) **Abstract**

The invention concerns a device (1, 101) for analyzing the modes of a multi-mode fiber, wherein the input of the device is a part of a multi-mode fiber (2, 102), the multi-mode fiber (2, 102) is spliced into a plurality of single-mode fibers (3, 103), the plurality of single-mode fibers (3, 103) are connected to a first side (4, 104) of an array (5, 105) of waveguides (6, 106), at the second side of the array (5, 105) means are present to detect the light leaving the waveguides (6, 106). The invention also concerns a control unit for controlling a fiber-laser using the device (1, 101).

## Description

Optical fiber lasers are widely used in science and industry. In optical fiber lasers a fiber serves as a laser medium. Doped large mode area fibers with a core diameter of several microns and a length of several meters are often used. The fiber is pumped by a lamp or another laser.

Large mode area fibers are multi-mode but the fundamental mode can be excited with high efficiency. However, modal instability of the fiber laser may result at very high pump powers. Especially for this reason the measuring of the modes in a fiber laser is of relevance.

Most of the existing mode analyzers require either mechanical scanning of the near field of the fiber [J. W. Nicholson et al. Opt. Exp. 16, 7233 (2008)] or iterative data processing [F. Stuzki et al. Opt. Lett. 36, 4572 (2011)], which require measurements lasting over timescales much longer than those typical for modal instability (∼1 ms) .

Direct measurements of the electrical field of the light profile by means of a wavefront sensor [M. Paurisse Opt.Exp. 20,4074 (2012)] are also computationally intensive since they require the estimation of two dimensional integrals on a fine grid of points.

The US 8,867,082 B2 discloses a method to detect the distribution of the light intensity in different modes of an optical fiber laser. The light source to pump the optical fiber laser can be controlled. There are optical components to guide the light, an optical sensor and an electronic data processing unit. Measuring the intensity distribution of the light is based on a multidimensional spectrum, wherein propagation velocities of different oscillation modes are analyzed for selected ranges of frequency.

The problem of the present invention is to provide a more simple device and method for detecting modes in a multi mode optical fiber.

The solution of this problem can be found in the independent patent claims. The dependent claims show preferred embodiments.

A device for analyzing the complex modal content of the near field of a multi-mode fiber has been conceived. The device comprises an input section and an interferometric analysis section.
The input section of the device is a tapered fiber known as "Photonic Lantern", which connects adiabatically a multi-mode fiber end to a plurality of single-mode fibers. Photonic Lanterns can distribute without losses light carried by the multimode section in the single mode outputs. Photonic Lanterns are used in Astrophotonic measurements, see also T. Birks et al. AOP 7, 107-167 (2015).

The plurality of single-mode fibers are connected to selected input sites of a periodic array of single-mode coupled waveguides. The excitation pattern of the array is detected at output side of the array and facilitates the amplitude and mutual phase of each mode excited in the multi-mode end of the Photonic Lantern.

Such arrays of waveguides are known as so called "Discrete Beam Combiner" [Minardi&Pertsch Opt. Lett. 35, 3009 (2010)]. Thus, an important aspect of the invention is to combine a Photonic Lantern with a Discrete Beam Combiner. This allows measuring the complex modal content in a multi-mode fiber in a simple way. Although Photonic Lanterns and Discrete Beam Combiner are known elements, the advantages of the combination in for detecting modes in a multi-mode fiber are surprising.

The array of waveguides is often designated as "Photonic lattice".

The different words "single-mode fiber" and "waveguide" are used to distinguish between the fibers originating from the multi mode fiber and the waveguide in the Discrete Beam Combiner. The "waveguide" can also be a fiber. The different wording serves for distinguishing between them.

It is possible that a Photonic lantern supporting a few modes at the multi-mode-fiber end is spliced to the fiber laser and divides the coupled optical field among several single mode fibers, which are connected to the first side of the waveguide array. It will be clear in the following that this allows to detect the relative phase and amplitude of each of the modes excited in the fiber laser.

In one embodiment of the invention there is at least one single-mode fiber per each of the N modes supported in the multi-mode fiber. This allows for a lossless distribution of the multi-mode optical field among the single-mode fibers while the device can be small.

It can be advantageous to use a Photonic lantern with more single-mode-fibers than supported modes. An uneven number, for example seven, single-mode-fibers showed good results for a Photonic lantern supporting 4 modes.

In one embodiment of the invention the number of waveguides is higher than the number of single-mode fibers. As per each mode some different properties, as the real and imaginary part of the electromagnetic field amplitude of the mode are to detect, it is advantageous if the number of waveguides is higher than the number of single mode-fibers.

In one embodiment of the invention there is at least a number N² of waveguides in the Discrete Beam Combiner to measure a number of N modal complex amplitudes in the multi-mode fiber. This is because the number of variables describing the output power excitation pattern of the array is N². Again, as mentioned above, the number of waveguides in the array should be higher than the number of single-mode fibers.

The number of waveguides can be quadratic. For example thirty-six waveguides have been successfully used. It is also possible to use twenty-seven waveguides, for example in a hexagonal array of waveguides. An appropriate diameter of the waveguides is about 6 µm for a numerical aperture (NA) of 0.17.

In one embodiment of the invention the means to detect the light are photodiode detector arrays. Photodiode detector arrays are widely used and well known in the art.

In one embodiment of the invention each detector is assigned to a related waveguide. The signal generated in the detector is proportional to the power of the single mode which is guided through the corresponding waveguide. The signal of each detector is a linear combination of the square amplitudes and mutual conjugate products of the complex field amplitudes of the different modes excited in the multi-mode fiber. Thus the amplitudes and mutual phases of the modes excited at the input of the multi-mode fiber can be retrieved from the detected powers through a simple and computationally inexpensive linear transformation (vector matrix multiplication).

As there is no time-consuming calculation necessary, the modes can be detected in a very short time, i.e. the necessary time for a measurement is less than one millisecond. This allows a measurement within the time range of the modes. So a measurement with a frequency of more than one kilohertz is possible.

The invention also concerns a Control unit for controlling a fiber-laser using a device as described above. For controlling a fiber laser the instantaneous operation condition of the fiber laser is to detect. It needs no explanation that monitoring is more effective the less time is needed for detecting the instantaneous operation condition of the fiber laser. For this reason the described device allows an improved monitoring of the fiber laser. It is possible to detect the modal distribution and relative phase in high power fiber-lasers.

In one embodiment of the Control unit the control unit is adapted to suppress modal instability. Modal instabilities are a widely known problem at the operation of fiber lasers. If the modal instability is detected the modal instability normally can be suppressed, for example by changing the optical pumping of the fiber laser. An important challenge related to the suppressing of modal instability is the fast measurement of the different modes in the fiber. Therefore the device described above is of high relevance for the suppressing of modal instability. Due to the fast measurement a real time compensating of modal instability in fiber lasers is possible.

The invention also concerns a method for detecting modes, especially mode instability in an multimode optical fiber using a device described above.

Furthermore the invention also concerns a method for suppressing modal instability in a multi mode optical fiber using the control unit explained above.

The details of the methods are clear with respect of the details of the device and are not repeated.

In the following the invention is explained on the basis of preferred embodiments with reference to the drawings. In the drawings:
- Fig. 1: shows a perspective view of a device for dividing the light of a multi mode fiber in a plurality of waveguides.
- Fig. 2: shows a view of the device in the direction of light propagation
- Fig. 3: shows a view of the device perpendicular to the direction of light propagation
- Fig. 4: shows a device similar to Fig. 1 with a different number of waveguides

In the device 1 light coupled to a four-mode fiber 2 is guided. The multi-mode fiber 2 has an adiabatic transition to four single-mode fibers 3. The single-mode fibers 3 end in a first side 4 of an array 5 of thirty-six evanescently coupled waveguides 6.

At the second side 7 of the array 5 detectors, which are not shown, are arranged. Normally one detector per each waveguide 6 is provided.

The device is operated at a wavelength of 1.5 µm and is capable analyzing up to four modes.

The multi-mode fiber 2 has a 12 µm circular core with a step-index profile (NA = 0.17) and extends to about 5 mm. Such a fiber supports a maximum of 4 linear polarized modes at the operating wavelength of 1.5 pm.

The single-mode fibers 3, emerging from the multimode fiber 2 have a diameter D of 6 pm.
The single-mode fibers 3 split from each other gradually to a maximum center to center separation of 10 µm over a length of 3 mm, thus performing the function of a Photonic lantern.
An adiabatic transition is maintained in such configuration and the waveguides which only support a single mode remain evanescently coupled at maximum separation.

The ends of the four single-mode fibers 3 form the outputs of the Photonic lantern. The single mode fibers are spliced to the array 5, which is a two dimensional array. The array has thirty-six identical waveguides with a diameter of D = 6 pm. The distance between adjacent waveguides is 10 pm. The single-mode fibers 3 are connected to four adjacent waveguides in the array 5 in square formation but off-center by one site of the array 5. The array 5 has a total longitudinal length of 5 mm. The refractive index difference between the core and the cladding of the waveguides 6 is 0,01 (NA 0.17) and it is kept constant along the entire structure.

The array 5 of the waveguides 6 has the function a Discrete Beam combiner.

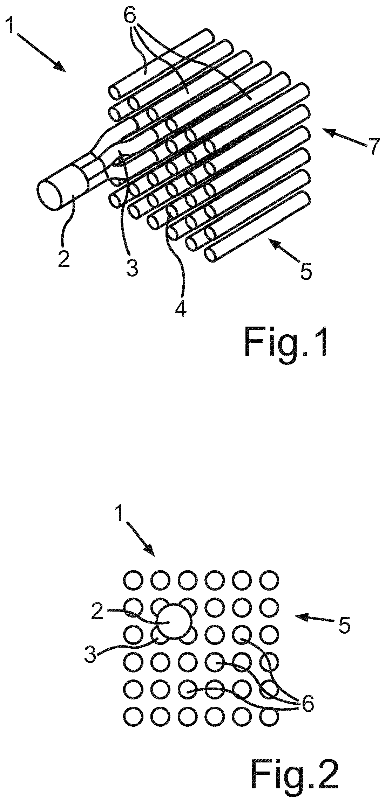

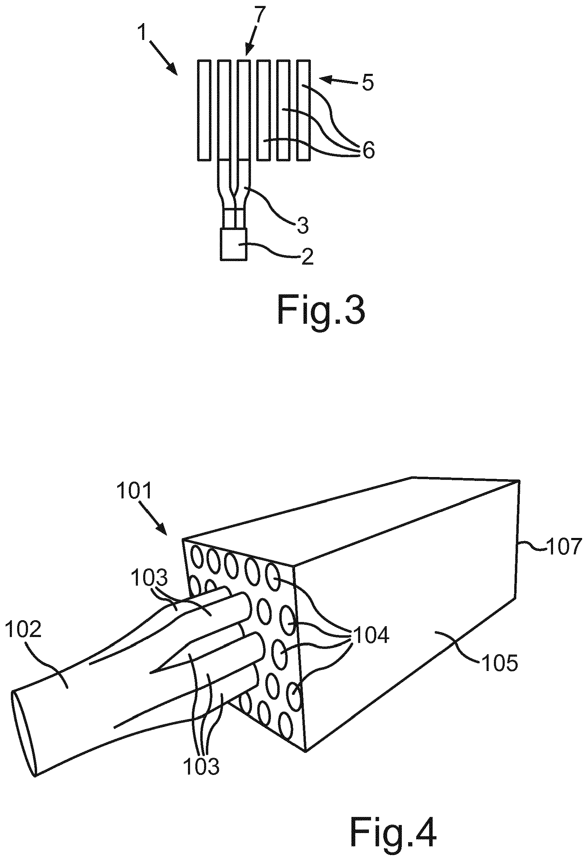

Fig. 4 shows an alternative device. Generally the explanations concerning Figs 1 to 3 are still valid. But there are some changes, as will be described in the following.

In the device 101 light of a multi mode fiber 102 is guided. The multi-mode fiber 102 has an adiabatic transition to seven single-mode fibers 103. The seven single-mode fibers 103 end in a first side 104 of an array 105 of waveguides 106.

At the second side 107 of the array 105 detectors, which are not shown, are arranged. Normally one detector per each waveguide 106 is provided.

The device 101 is operated at a wavelength of 1.5 µm and is capable analyzing up to four modes.

The multi-mode fiber 102 has a 12 µm circular core with a step-index profile (NA 0.17) and extends to about 5 mm. Such a fiber supports a maximum of four linear polarized modes at the operating wavelength of 1,5 pm.

The single-mode fibers 103, emerging from the multimode fiber 102 have a diameter D of 6 pm.

The single-mode fibers 103 split from each other gradually to a maximum center to center separation of 7.5 µm over a length of 3 mm, thus performing the function of a Photonic lantern.

An adiabatic transition is maintained in such configuration and the waveguides which only support a single mode remain evanescently coupled at maximum separation.

The ends of the seven single-mode fibers 103 form the outputs of the Photonic lantern. The single mode fibers are spliced to the array 105, which is a two dimensional array.

The array 105 is hexagonal and has 27 identical waveguides with a diameter of D = 6 pm. The lattice constant is 7.5 pm, adapted to the distance of the single-mode fibers 103. The array 105 has a total longitudinal length of 5 mm. The refractive index difference between the core and the cladding of the waveguides 106 is 0.01 (NA = 0.17) and it is kept constant along the entire structure.

Again, the array 105 of the waveguides 106 has the function a Discrete Beam combiner.

Although the invention has been explained in more detail by means of the exemplary embodiments, the invention shall not be restricted be the disclosed examples. Other variations can be found by a man skilled in the art without leaving the scope of protection.

### List of reference numbers

1 Device for analyzing the modes of a multi-mode fiber
2 Multi-mode fiber
3 Single mode-fiber
4 First side of an array of waveguides
5 Array of waveguides
6 Waveguide
7 Second side of the array 5
101 Device for analyzing the modes of a multi-mode fiber
102 Multi-mode fiber
103 Single mode-fiber
104 First side of an array of waveguides
105 Array of waveguides
106 Waveguide
107 Second side of the array 105

## Claims

1. Device (1, 101) for analyzing the modes of a multi-mode fiber, wherein the input of the device is a part of a multi-mode fiber (2, 102), the multi-mode fiber (2, 102) is spliced into a plurality of single-mode fibers (3), the plurality of single-mode fibers (3, 103) are connected to a first side (4, 104) of an array (5, 105) of waveguides (6, 106), at the second side of the array (5, 105) means are present to detect the light leaving the waveguides (6, 106).

2. Device according to claim 1 **characterized in that** there is at least one single-mode fiber (3, 103) per each mode to detect in the multi-mode fiber (2, 102).

3. Device according to one of the preceding claims **characterized in that** the number of waveguides (6, 106) is higher than the number of single-mode fibers (3, 103).

4. Device according to one of the preceding claims **characterized in that** there is at least a number N² of single-mode fibers (3, 103) to detect a number of N modes in the multi-mode fiber (2, 102).

5. Device according to one of the preceding claims **characterized in that** the means to detect the light are detectors.

6. Device according to the preceding claim **characterized in that** each detector is assigned to a related waveguide (6, 106).

7. Control unit for controlling a fiber-laser using a device (1, 101) according to one of the preceding claims

8. Control unit according to the preceding claim **characterized in that** the control unit is adapted to suppress modal instability.

9. Method for detecting modes, especially mode instability, in a multi-mode fiber (2, 102) using a device (1, 101) according to one of the claims 1 to 6.

10. Method for suppressing modal instability in a multi-mode fiber (2, 102) using a control unit according to one of the claims 7 to 8.
